# EUROPÄISCHE PATENTSCHRIFT

(11) **EP 3 481 169 B1**
(45) Veröffentlichungstag und Bekanntmachung des Hinweises auf die Patenterteilung: **16.02.2022**
(21) Anmeldenummer: 17745975.7
(22) Anmeldetag: 05.07.2017
(51) Int. Cl.: A01B 61/04

(54) **BODENBEARBEITUNGSGERÄT MIT ÜBERLASTSICHERUNG**
SOIL-WORKING DEVICE HAVING AN OVERLOAD PROTECTION MEANS
ENGIN DE TRAVAIL DU SOL POURVU D'UN DISPOSITIF DE SÉCURITÉ

(30) Priorität: 07.07.2016 DE 102016112522
(43) Veröffentlichungstag der Anmeldung: 15.05.2019
(73) Patentinhaber: Lemken GmbH & Co. KG, 46519 Alpen (DE)
(72) Erfinder: ACHTEN, Georg, 47918 Tönisvorst (DE); MEURS, Wilhelm, 46519 Alpen (DE); PAULESSEN, Georg, 47877 Willich (DE)
(86) Internationale Anmeldenummer: PCT/DE2017/100561
(87) Internationale Veröffentlichungsnummer: WO 2018/006907

(56) Entgegenhaltungen:
- EP-A1- 1 358 783
- EP-B1- 1 300 060
- WO-A1-2016/086918
- DE-A1- 10 358 208

## Beschreibung

Die Erfindung betrifft ein Bodenbearbeitungsgerät mit Überlastsicherung gemäß Oberbegriff des Patentanspruches 1.

Aus der deutschen Patentanmeldung DE 10 358 208 A1 ist eine Kurzscheibenegge mit vertikal schwenkbaren Haltestielen bekannt, an welchen drehbare Schneidscheiben angeordnet sind, wobei die Schwenkbarkeit des Haltestiels mit vier Gummiprofilen realisiert wird, welche zwischen einem Rahmenrohr und zwei haltestielseitigen Profilen eingeklemmt werden. Beim Auftreffen der Schneidscheibe auf ein Hindernis im Boden werden die Gummiprofile elastisch verformt und der Haltestiel schwenkt relativ zum Rahmen nach oben. Aufgrund unterschiedlicher Eindringwiderstände der Schneidscheiben in die zu bearbeitende Bodenoberfläche ist eine exakte und definierte Tiefeneinstellung der Schneidscheiben nicht gewährleistet.

In der europäischen Patentschrift EP 1 300 060 B1 ist ebenfalls eine Kurzscheibenegge beschrieben, bei der als drehbare Schneidscheiben ausgeführte Werkzeuge mit einem Haltestiel an einem Rahmen vertikal schwenkbar gelagert sind. Dabei liegen die Haltestiele auf einem unteren Anschlag auf und werden von oben mit einem vorgespannten Federspeicher in Arbeitsposition gehalten und können bei Auftreffen auf ein Hindernis nach oben ausweichen. Durch die definierte Position des Haltestiels auf dem Anschlag wird eine exakte Tiefenführung gewährleistet. Eine ähnliche Lösung wird in der europäischen Patentanmeldung EP 1 358 783 A1 vorgeschlagen, wobei sich ein überstehender Anschlaghebel am Geräterahmen abstützt. In der WO 2016 086 918 A1 wird der Anschlag durch eine Zuglasche, welche innerhalb einer Druckfeder angeordnet ist, gebildet. Insbesondere bei hohen Vorspannkräften des Federspeichers in leichtem, jedoch steinbesetztem Boden spricht diese Art der Überlastsicherung öfter an, sodass beim Aufschlag des Haltestiels auf den Anschlag hohe Rückschlagenergien absorbiert werden müssen, welche die beteiligten Teile belastet.

Aufgabe der Erfindung ist es, eine verbesserte Überlastsicherung für Bodenbearbeitungsgeräte bereitzustellen und die oben beschriebenen Nachteile zu beseitigen.

Diese Aufgabe wird durch die Merkmale des kennzeichnenden Teiles des Anspruches 1 gelöst.

Durch Zuordnung eines Energiespeichers zum Tiefenanschlag wird die Aufschlagenergie des Haltestiels aus der oberen Überlaststellung nicht mehr allein und abrupt durch den Tiefenanschlag in den Rahmen eingeleitet, sondern durch den dem Tiefenanschlag zugeordneten Energiespeicher zumindest teilweise absorbiert. Hierdurch kann der Tiefenanschlag selbst, aber auch die umliegenden Lagerungen und Bauteile kleiner, haltbarer und kostengünstiger dimensioniert werden.

Durch geschickte Anordnung des Energiespeichers, des Tiefenanschlages und des Haltestiels relativ zum Rahmen bzw. zum Querrohr kann sowohl die Auslöseenergie des Haltestiels beim Schwenken um die Querachse in die obere Überlaststellung, wenn das Werkzeug auf einen Fremdkörper trifft, in den selben Energiespeicher eingeleitet werden, welcher auch die Aufschlagenergie des Haltestiels auf den Tiefenanschlag absorbiert, wenn der Haltestiel aus der oberen Überlaststellung wieder nach unten schnellt. Dabei federt der Haltestiel kurzzeitig in eine untere Überlaststellung durch und wird durch den Energiespeicher und den Tiefenanschlag wieder in die Arbeitsposition zurückgeführt, welche die Sollposition des Werkzeuges während der Bodenbearbeitung darstellt.

Durch eine spezielle Anordnung des Energiespeichers relativ zum Rahmen bzw. zur Querachse, um welche der Haltestiel schwenkt, als auch zum Tiefenanschlag und zur Lagerkonsole, können verschieden große Auslösemomente der Überlastsicherung in die jeweilige obere bzw. untere Überlaststellung der Vorrichtung realisiert werden. So kann das Auslösemoment der Überlastsicherung in die obere Überlaststellung größer gewählt werden, wenn durch den Betrieb des Werkzeuges in der Bodenoberfläche nach oben gerichtete Auftriebskräfte zu erwarten sind. Dies tritt beispielsweise bei Scheibeneggen oder Grubbern mit weniger aggressiv angestellten Scheiben oder Zinken auf. Andererseits kann man das Auslösemoment der Überlastsicherung in der oberen Überlaststellung geringer wählen als das in der unteren Überlaststellung, wenn das Werkzeug durch die Vorwärtsbewegung des Bodenbearbeitungsgerätes von allein in die Bodenoberfläche eingezogen wird. Dies ist beispielsweise bei einem Bodenbearbeitungsgerät mit entsprechend aggressivem Untergriff der Werkzeuge der Fall.

Je nach aufzubringender Vorspann- oder Auslösekraft des Energiespeichers kann dieser als ein- oder mehrteilige elastische Feder ausgebildet werden, beispielsweise als Spiralfeder. Durch Ineinanderschieben mehrerer Spiralfedern unterschiedlichen Durchmessers können kompakte Bauweisen mit verschiedensten Federraten realisiert werden. In analoger Weise ist eine Kombination verschiedener Blatt-, Biege- , Druck, Zug- oder Torsionsfedern möglich. Auch können Elastomerblöcke mit federnder und dämpfender Wirkung eingesetzt werden.

Eine weitere Möglichkeit eines Energiespeichers stellen druckmittelbeaufschlagte Stellzylinder dar, deren wirksame Druckkammerflächen unterschiedlich groß oder mit verschiedenen Drücken mit einem oder mehreren Druckreservoirs verbunden sind.

Durch Verbindung des Energiespeichers mit dem Haltestiel einerseits und einem beweglichen Widerlager am Rahmen andererseits kann der Tiefenanschlag zwischen dem Haltestiel und dem beweglichen Widerlager vorzugsweise gelenkig angeordnet werden. Durch diese Anordnung wird eine kompakte Bauart der Überlastsicherung realisiert, welche ein Schwenken des Haltestiels um eine Querachse in eine obere und untere Überlaststellung ermöglicht.

Wird der Tiefenanschlag zumindest teilweise innerhalb oder nahe der Außenkontur des Energiespeichers angeordnet, so wirken die Druck- und Zugkräfte auf den Energiespeicher bzw. auf den Tiefenanschlag in ähnlicher Richtung, sodass die Krafteinleitung in die jeweiligen Gelenklager bzw. beider Lagerpunkte oder Abstützpunkte des Energiespeichers bzw. des Tiefenanschlages in räumlicher Nähe zueinander erfolgt.

Unterstützt wird die kompakte Bauweise der Überlastsicherung dadurch, dass der Tiefenanschlag in einer Wirkrichtung starr und in der anderen Wirkung zumindest teilweise nachgiebig ausgebildet ist. Dies wird beispielsweise durch eine Anschlaglasche realisiert, bei der zumindest ein Gelenkpunkt als Durchbruch in Form eines Langloches ausgebildet ist. Anstelle einer Langlochlasche können beispielsweise auch ein Zugseil oder eine Glieder- oder Gelenkkette verwendet werden. Umgekehrt ist auch ein elastischer oder beweglicher Druckstab denkbar, welcher durch eine Blockier- oder Anschlageinrichtung ein minimales Einbaumaß nicht unterschreitet.

Die vorstehende Vorrichtung ist insbesondere zur Verwendung in einem Grubber oder Lockerungsgerät geeignet, bei der Gruber- oder Lockerungsschare an den jeweiligen Haltestielen und zueinander beabstandet befestigt sind. Ebenso findet die Vorrichtung in einer (Kurz-) Scheibenegge oder Rollegge eine Anwendung, an welcher endseits der Haltestiele beispielsweise rotierende Hohlscheibenwerkzeuge angebracht sind, welche in die Bodenoberfläche eindringen

Die Erfindung zeichnet sich insbesondere dadurch aus, dass ein Tiefenanschlag, welcher die Arbeitsstellung eines Bodenbearbeitungswerkzeuges an einem Haltestiel definiert, nicht starr zu einem Maschinenrahmen zugeordnet ist, sondern mittels eines Energiespeichers die Aufschlagenergie des Haltestiels mit dem daran befestigten Werkzeug beim Ansprechen der Überlasteinrichtung und Rückstellung derselben zumindest teilweise absorbiert und gefedert oder gedämpft in den Rahmen des Bodenbearbeitungsgerätes einleitet. Insbesondere bei häufigem Ansprechen der Überlasteinrichtung, wie dies auf einer stark mit Fremdkörpern durchsetzten, zu bearbeitenden Bodenoberfläche der Fall ist, wird die Haltbarkeit der erfindungsgemäßen Überlasteinrichtung stark erhöht.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig.1: Seitenansicht eines erfindungsgemäßen Bodenbearbeitungsgerätes,
- Fig.2: eine Ansicht des Überlastelementes in Arbeitsstellung,
- Fig. 3: die Ansicht aus Figur 2 als Querschnitt in oberer Überlaststellung und
- Fig. 4: den gleichen Querschnitt in unterer Überlaststellung.

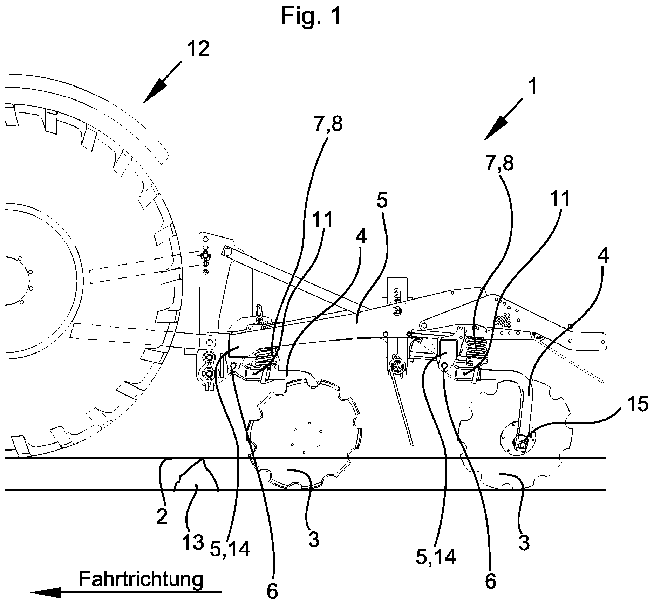

Figur 1 zeigt die Seitenansicht eines landwirtschaftlichen Bodenbearbeitungsgerätes 1, welches durch eine Zugmaschine 12 in einer Fahrtrichtung über eine Bodenoberfläche 2 eines landwirtschaftlichen Ackers gezogen wird, um diese zu bearbeiten, zu lockern oder Material in die Bodenoberfläche einzuarbeiten. Das Bodenbearbeitungsgerät 1 besteht aus einem Rahmen 5, an welchen, von oben auf das Gerät gesehen, seitlich und/oder hintereinander Bodenbearbeitungswerkzeuge 3 angeordnet sind. Vorzugsweise ist das Bodenbearbeitungsgerät mit einem oder mehreren Querrohren 14 versehen, welche sich seitlich über die Breite des Bodenbearbeitungsgerätes 1 und oberhalb der Bodenoberfläche 2 erstrecken und an welchen jeweils Haltestiele 4 befestigt sind, welche mit ihrem einen Ende am Querrohr 14 bzw. Rahmen 5 befestigt sind und an deren anderen Ende ein oder mehrere Bodenbearbeitungswerkzeuge befestigt sind. Dies können Schare, Meißel, Lockerungszinken, Flügelschare oder ähnliche Werkzeuge sein, oder, wie hier dargestellt, Schneidscheiben, welche drehbar mit einem Lager 15 am unteren Ende des Haltestiels 4 angeordnet sind. Durch die schräge Anstellung der als Hohlscheiben ausgebildeten Werkzeuge 3 in Fahrtrichtung und/oder im Winkel zur Bodenoberfläche 2 dringen diese in die Bodenoberfläche 2 ein und lockern oder mischen Bodenmaterial bei der Vorwärtsfahrt des Bodenbearbeitungsgerätes 1 mit der Zugmaschine 12. Die am unteren Ende der Werkzeuge 3 dargestellte Linie deutet die Arbeitstiefe der Werkzeuge 3 unterhalb der Bodenoberfläche 2 an. Der darunter dargestellte Pfeil weist in die Fahrtrichtung. Auf oder unterhalb der Bodenoberfläche können Hindernisse 13 wie Steine oder andere Fremdkörper liegen, auf welche die Werkzeuge 13 bei Vorwärtsfahrt auftreffen können und die Übelasteinrichtung 7 auslösen. Die Haltstiele 4 sind am Rahmen 5 bzw. Querrohr 14 mittels einer Lagerkonsole 11 um eine Querachse 6 vorzugsweise in vertikaler Richtung schwenkbar befestigt. Die Lagerkonsole 11 bzw. der Haltestiel 4 ist mit einer Überlastsicherung 7 versehen, welche durch die ausgeübte Kraft eines Energiespeichers 8 die Lagerkonsole 11 bzw. die Haltestiele 4 in der vorgesehenen Arbeitsposition, welche für die Werkzeuge 3 vorgesehen und durch die unterhalb der Bodenoberfläche 2 dargestellte Linie angedeutet ist, hält. Die Tiefenführung des Bodenbearbeitungsgerätes 1 relativ zur Bodenoberfläche erfolgt durch die Werkzeuge 3 des Bodenbearbeitungsgerätes 1 selbst, durch die vorgespannte Zugmaschine 12, welche das Bodenbearbeitungsgerät 1 trägt oder durch weitere, hier nicht dargestellte Tiefenführungseinrichtungen des Bodenbearbeitungsgerätes 1, wie beispielsweise einer Walze, Stütz- oder Transporträdern oder anderer geeigneter Tiefenführungseinrichtungen, welche mit dem Rahmen 5 starr oder beweglich einstellbar in Verbindung stehen.

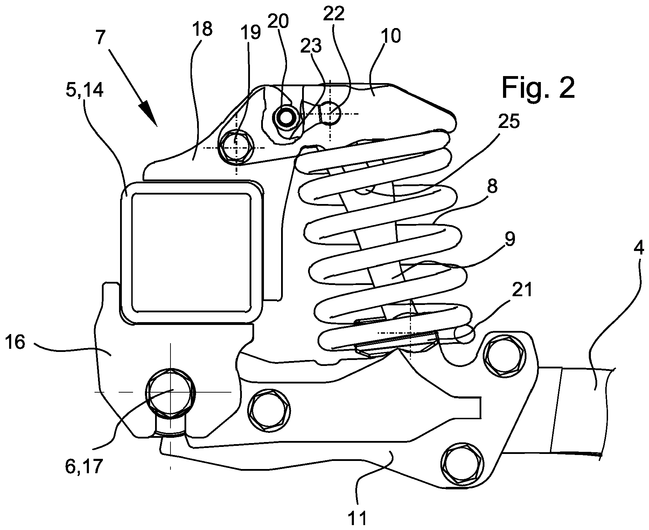

Figur 2 zeigt die zuvor beschriebene Überlasteinrichtung 7 in ihrer Arbeitsstellung. An dem Rahmen 5, welcher hier in Seitenansicht in einem Ausschnitt dargestellt ist, ist eine Lagerkonsole 11 um eine Querachse 6 schwenkbar mit dem Querrohr 14 des Rahmens 5 verbunden. Am Querrohr 14 sind beispielsweise Lagerlaschen 16 befestigt, welche die Konsole 11 vorzugsweise vertikal schwenkbar aufnehmen. Sowohl die Lagerlasche 16 als auch die Lagerkonsole 11 sind dabei mit Querbohrungen versehen, welche mit einem Bolzen 17 abgesteckt sind und die Querachse 6 bilden, um welche die Bewegung stattfindet. Auch andere Ausführungen der Lagerung sind denkbar, ebenso eine direkte Befestigung des Haltestiels 4 ohne eine weitere Lagerkonsole 11. Auf der oberen Seite des Querrohres 14 ist etwa auf Höhe der Lagerkonsole 11 eine weitere Konsole 18 am Querrohr 14 befestigt. Die Konsole 18 ist mit Querbohrungen zur Aufnahme einer weiteren Achse 19 versehen, um welche ein Widerlager 10 ebenfalls vertikal bzw. in Bewegungsrichtung der Lagerkonsole 11 schwenkbar gelagert ist. Am oberen hinteren Ende ist die Konsole 18 mit einer weiteren, länglichen Ausnehmung 23 versehen, in welcher sich ein mit dem Widerlager 10 verbundener Anschlag 20 innerhalb der Ausnehmung 23 bewegt und eine obere und eine untere Schwenkstellung des Widerlagers 10 relativ zur Konsole 18 definiert. Zwischen dem Widerlager 10 und der Lagerkonsole 11 ist ein als Spiralfeder ausgebildeter Energiespeicher 8 angeordnet, welcher sich an seinem oberen Ende gegen das Widerlager 10 und einem unteren Ende über eine Brücke 21 auf die Lagerkonsole 11 abstützt. Dabei ist die Lagerkonsole 11 mit einer Spitzkante versehen, welche zusammen mit einer vorgeformten Ausnehmung unterhalb der Brücke 21 eine unter Last des Energiespeichers 8 selbstzentrierende Linien- oder Kipplagerung darstellt. Das Widerlager 10 ist mit einem weiteren Bolzen 22 versehen, an welchem ein Tiefenanschlag 9 in Form einer Zuglasche mit einer Ausnehmung 25 eingehängt ist. Das untere Ende des Tiefenanschlages 9 ist beweglich mit der Lagerkonsole 11 bzw. dem Haltestiel 4 verbunden, wobei die Verbindung durch die Brücke 21 verdeckt ist. Die Dimension des Tiefenanschlages 9 ist derart gewählt, dass der Energiespeicher 8 zwischen Widerlager 10 und Lagerkonsole 11 unter Vorspannung steht und mit dieser Vorspannkraft das Widerlager, wie dargestellt mit dem Anschlag 20 in die obere Position des Widerlagers fixiert, welche durch die Ausnehmung 23 der Konsole 18 vorgegeben ist. Die Vorspannung des Energiespeichers 8 ist so gewählt, dass das Widerlager 10 durch das Eigengewicht der Konsole 11, des Haltestiels 4 und des daran befestigten Bodenbearbeitungswerkzeuges oder dessen Untergriffkräfte nicht von allein in die untere Stellung gezogen werden kann, sondern in der dargestellten Position verharrt, welche Arbeitstellung des Haltestiels 4 bzw. des daran befestigten Werkzeuges definiert. Zugleich ist die Vorspannung des Energiespeichers 8 derart groß, dass keine Auftriebskräfte des Werkzeuges, welche durch den normalen Bodenwiderstand bei Vorwärtsfahrt des Bodenbearbeitungsgerätes entstehen, einen Aushub des Haltestiels 4 aus der Arbeitsstellung bewirken.

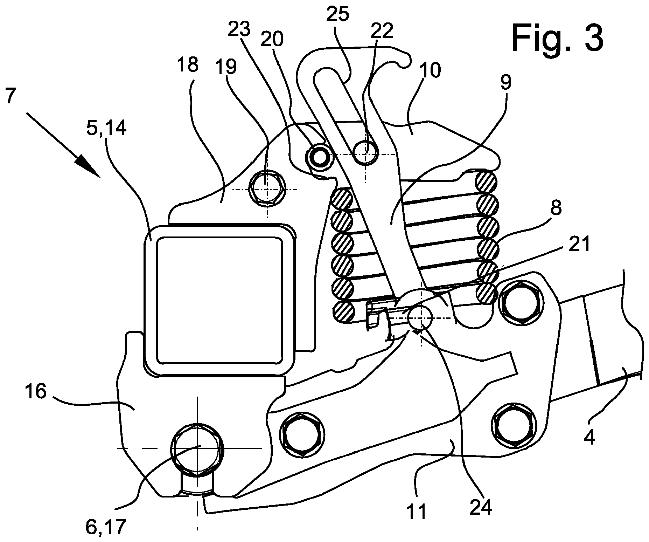

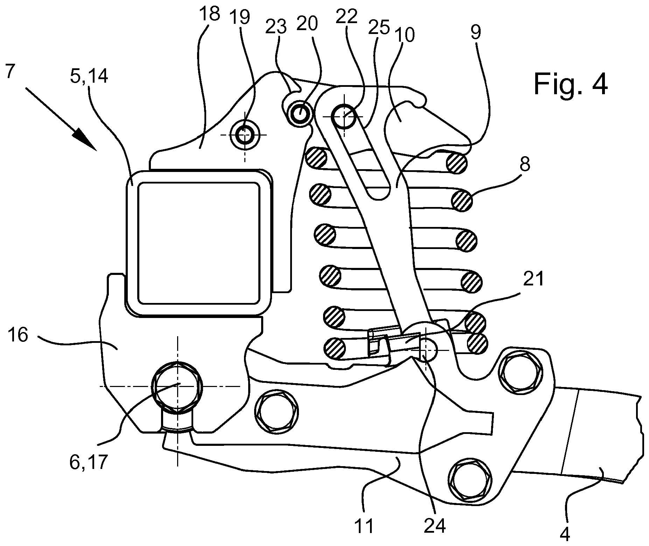

In Figur 3 ist der Querschnitt der Überlasteinrichtung 7 in der oberen Überlaststellung dargestellt, wie sie bei einem Aufschlag des Werkzeuges auf ein Hindernis auftritt. Durch Auftreffen des am Haltestiel 4 befestigten Werkzeuges auf ein Hindernis im Boden schwingt der Haltestiel 4 mitsamt der Lagerkonsole 11 um die Querachse 6 nach oben und drückt mittels Brücke 21 den Energiespeicher 8 zusammen. Der Energiespeicher 8 liegt am Widerlager 10 an und hält diesen in der oberen Stellung, welche durch den Anschlag 20, der in der Ausnehmung 23 der Konsole 18 am oberen Ende anliegt, vorgegeben ist. Mit dem Zusammendrücken des Energiespeichers 8 wird zugleich der Tiefenanschlag 9, welcher mit der Lagerkonsole 11 über den Bolzen 24 gelenkig verbunden ist, ausgehoben. Durch eine längliche Ausnehmung 25 im oberen Bereich des Tiefenanschlages 9 kann sich dieser so weit anheben, bis das untere Ende der Ausnehmung am Bolzen 22, welcher mit dem Tiefenanschlag 10 verbunden ist, anliegt. Diese Stellung gibt die maximale Auslenkung des Haltestiels 4 bzw. der Konsole 11 in Überlaststellung vor, welche zugleich, wie dargestellt, der maximalen Kompression bzw. dem minimalen Einbaumaß des Energiespeichers 8 entspricht. Die Brücke 21 als Verbindung zwischen Energiespeicher 8 und Lagerkonsole 11 ist in Figur 3 und Figur 4 nur teilweise dargestellt, um den Bolzen 24 als gelenkige Verbindung zwischen Lagerkonsole 11 und Tiefenanschlag 9 freizustellen, da dieser sonst in der Darstellung verdeckt würde.

Nach Passieren des Hindernisses im Boden schwingt der Haltestiel 4 zusammen mit der Lagerkonsole 11 wieder in die Arbeitsposition zurück, wie sie unter Figur 2 beschrieben ist. Dabei gleitet der Tiefenanschlag 9 mit seiner Ausnehmung 25 so weit nach unten, bis das obere Ende der Ausnehmung 25 am Bolzen 22 anliegt. Gemäß Figur 4 wird das Widerlager 10 durch die Aufschlagenergie des Tiefenanschlages 9, welcher auf dem Bolzen 22 trifft, entgegen der Federkraft des Energiespeichers 8 so weit nach unten gezogen, bis der Anschlag 22 auf der unteren Seite der Ausnehmung 23 der Konsole 18 aufliegt. Durch dieses Nachgeben des Widerlagers 10 kann der Haltestiel 4 und die Lagerkonsole 11 um die Achse 6 weiter nach unten schwenken, womit die Schlagenergie, welche der Tiefenanschlag 9 über den Bolzen 22 auf das Widerlager 10 und den Energiespeicher 8 ausgeübt hat, durch den Energiespeicher 8 kompensiert oder zumindest teilweise abgefedert wird. Ebenso kann ein Teil der Aufschlagenergie durch das tiefere Eindringen des Werkzeuges in den Boden absorbiert werden. Durch die Bewegung des Widerlagers 10 relativ zur Konsole 18 um die Achse 19 wird der Energiespeicher 8 am hinteren Ende des Widerlagers 10 stärker verformt als an der vorderen Seite des Widerlagers 10, an welcher der Energiespeicher 8 ebenfalls anliegt. Durch diese Verformung entsteht eine Rückstellkraft des Energiespeichers 8 auf das Widerlager 10, mit welchem der Tiefenanschlag 9 über den Bolzen 22 wieder in die Position hochgezogen wird, wie sie in Figur 2 dargestellt ist. Dabei ist die Rückstellkraft des Energiespeichers 8 so groß, dass der Tiefenanschlag 9 über seine Verbindung zu Lagerkonsole 11 bzw. zum Haltestiel 4 das Werkzeug zur Bodenbearbeitung, den Haltestiel 4 und die Lagerkonsole 11 entgegen ihrem Eigengewicht und einem eventuellen Untergriff des Werkzeuges um die Achse 6 schwenkend in ihre ursprüngliche Arbeitsstellung zurückzieht, wie in Figur 2 dargestellt. Es folgen 4 Blatt mit Zeichnungen.

**BEZUGSZEICHENLISTE**

| | |
|---|---|
| 1 | Bodenbearbeitungsgerät |
| 2 | Bodenoberfläche |
| 3 | Werkzeug |
| 4 | Haltestiel |
| 5 | Rahmen |
| 6 | Querachse |
| 7 | Überlasteinrichtung |
| 8 | Energiespeicher |
| 9 | Tiefenanschlag |
| 10 | Widerlager |
| 11 | Lagerkonsole |
| 12 | Zugmaschine |
| 13 | Hindernis |
| 14 | Querrohr |
| 15 | Lager |
| 16 | Lagerlasche |
| 17 | Bolzen |
| 18 | Konsole |
| 19 | Achse |
| 20 | Anschlag |
| 21 | Brücke |
| 22 | Bolzen |
| 23 | Ausnehmung |
| 24 | Bolzen |
| 25 | Ausnehmung |

## Patentansprüche

1. Bodenbearbeitungsgerät (1), welches maschinell in einer Fahrrichtung über eine Bodenoberfläche (2) eines zu bearbeitenden landwirtschaftlichen Ackers bewegt wird und mit Werkzeugen (3) zum Lockern oder Schneiden der Bodenoberfläche (2) versehen ist, wobei die Werkzeuge (3) quer zur Fahrtrichtung des Bodenbearbeitungsgerätes (1) nebeneinander und in einer oder mehreren Reihen hintereinander beabstandet mit Haltestielen (4) an einem Rahmen (5) angeordnet sind, wobei die Haltestiele (4) jeweils über zumindest eine Querachse (6) vertikal schwenkbar am Rahmen (5) angeordnet sind, wobei zwischen Haltestiel (4) und Rahmen (5) eine Überlasteinrichtung (7) angeordnet ist, welche aus zumindest einem Energiespeicher (8) und einem Tiefenanschlag (9) besteht, wobei der Tiefenanschlag (9) die Arbeitsstellung des Werkzeuges (3) definiert und der Energiespeicher (8) beim Auftreffen des Werkzeuges (3) auf ein Hindernis im Boden eine Schwenkbewegung des Haltestiels (4) aus einer Arbeitsstellung in eine obere Überlastschutzstellung und nach Passieren des Hindernisses eine Rückführung des Haltestiels (4) in Arbeitsstellung ermöglicht, wobei der Energiespeicher (8) in der Arbeitsstellung mit einer Grundenergie oder Grundkraft vorbelastet ist,
**dadurch gekennzeichnet,**
**dass** dem Tiefenanschlag (9) ebenfalls ein Energiespeicher (8) zugeordnet ist, welcher beim Anschlag des Haltestiels (4) auf den Tiefenanschlag (9) eine Bewegung des Haltestiels (4) aus der Arbeitsstellung in eine untere Überlastschutzstellung und nach dem Anschlag eine Rückführung des Haltestiels (4) in Arbeitsstellung erzeugt oder zulässt.

2. Bodenbearbeitungsgerät nach Anspruch 1,
**dadurch gekennzeichnet,**
**dass** die Energie aus der Bewegung des Haltestiels (4) aus der Arbeitsstellung in die obere Überlaststellung und in die untere Überlaststellung in den gleichen Energiespeicher (8) eingeleitet wird.

3. Bodenbearbeitungsgerät nach Anspruch 1 oder 2,
**dadurch gekennzeichnet,**
**dass** das durch den Energiespeicher (8) um die Querachse (6) auf den Haltestiel (4) wirkende Auslösemoment in die obere Überlastschutzstellung und das Auslösemoment in die untere Überlastschutzstellung voneinander abweichen.

4. Bodenbearbeitungsgerät nach einem der vorstehenden Ansprüche,
**dadurch gekennzeichnet,**
**dass** der Energiespeicher (8) als ein- oder mehrteilige, elastische Feder ausgebildet ist.

5. Bodenbearbeitungsgerät nach einem der vorstehenden Ansprüche,
**dadurch gekennzeichnet,**
**dass** der Energiespeicher (8) als druckmittelbeaufschlagter Stellzylinder ausgebildet ist, dessen eine oder mehrere Druckkammern mit einem oder mehreren Druckreservoirs verbunden sind.

6. Bodenbearbeitungsgerät nach einem der vorstehenden Ansprüche,
**dadurch gekennzeichnet,**
**dass** der Energiespeicher (8) einerseits zumindest mittelbar mit dem Haltestiel (4) und andererseits mit einem beweglichen Widerlager (10), welches schwenkbar am Rahmen (5) gelagert ist, in Verbindung steht.

7. Bodenbearbeitungsgerät nach einem der vorstehenden Ansprüche,
**dadurch gekennzeichnet,**
**dass** der Tiefenanschlag (9) von der Kontur des Energiespeichers (10) zumindest teilweise umschlossen ist.

8. Bodenbearbeitungsgerät nach einem der vorstehenden Ansprüche,
**dadurch gekennzeichnet,**
**dass** der Tiefenanschlag (9) in einer Wirkrichtung starr und in der anderen Wirkrichtung zumindest teilweise nachgiebig ausgebildet ist.

9. Bodenbearbeitungsgerät nach einem der vorstehenden Ansprüche,
**dadurch gekennzeichnet,**
**dass** die am Haltestiel (4) befestigten Werkzeuge (3) zur Bodenbearbeitung als Lockerungsschare, Grubberschare oder als relativ zum Haltestiel (4) um ein als Rotationachse wirkendes Lager (5) rotierende Schneid- oder Mischwerkzeuge ausgebildet sind.

## Claims

1. A soil tillage implement (1) which is mechanically moved in a travelling direction over a ground surface (2) of an agricultural field to be tilled and is provided with tools (3) for loosening or cutting the ground surface (2) wherein the tools (3) are arranged transversely to the travelling direction of the soil tillage implement (1) next to one another and in one or multiple rows one behind the other on a frame (5) by way of holding stems (4), wherein the holding stems (4) are each arranged so as to be vertically pivotable on the frame (5) via at least one transverse axis (6), wherein between holding stem (4) and frame (5) an overload device (7) is arranged, which consists of at least one energy store (8) and a depth stop (9), wherein the depth stop (9) defines the working position of the tool (3) and the energy store (8), when the tool (3) strikes an obstacle in the ground, makes possible a pivot movement of the holding stem (4) out of a working position into an upper overload protection position and, having passed the obstacle, makes possible a return of the holding stem (4) into the working position, wherein the energy store (8) is preloaded in the working position with a basic energy or basic force,
**characterised**
**in that** the depth stop (9) is likewise assigned an energy store (8), which, when the holding stem (4) strikes the depth stop (9), generates or allows a movement of the holding stem (4) out of the working position into a lower overload protection position and following the strike, generates or allows a return of the holding stem (4) into working position.

2. The soil tillage implement according to Claim 1,
**characterised**
**in that** the energy out of the movement of the holding stem (4) out of the working position into the upper overload position and into the lower overload position is introduced into the same energy store (8).

3. The soil tillage implement according to Claim 1 or 2,
**characterised**
**in that** the triggering torque by the energy store (8) acting about the transverse axis (6) on the holding stem (4) into the upper overload protection position and the triggering torque into the lower overload protection position differ from one another.

4. The soil tillage implement according to any one of the preceding claims,
**characterised**
**in that** the energy store (8) is formed as a one-piece or multi-part elastic spring.

5. The soil tillage implement according to any one of the preceding claims,
**characterised**
**in that** the energy store (8) is formed as an actuating cylinder subjected to hydraulic pressurisation, whose one or multiple pressure chambers are connected to one or multiple pressure reservoirs.

6. The soil tillage implement according to any one of the preceding claims,
**characterised**
**in that** the energy store (8) on the one hand is at least indirectly in connection with the holding stem (4) and on the other hand in connection with a movable counter-bearing (10) which is pivotably mounted on the frame (5).

7. The soil tillage implement according to any one of the preceding claims,
**characterised**
**in that** the depth stop (9) is at least partly enclosed by the contour of the energy store (10).

8. The soil tillage implement according to any one of the preceding claims,
**characterised**
**in that** the depth stop (9) is formed rigidly in an active direction and at least partly resiliently in the other active direction.

9. The soil tillage implement according to any one of the preceding claims,
**characterised**
**in that** the tools (3) for the soil tillage fastened to the holding stem (4) are formed as loosening share, cultivator share or as rotating cutting or mixing tools rotating relative to the holding stem (4) about a bearing (5) acting as rotary axis.

## Revendications

1. Engin de travail du sol (1), lequel est déplacé mécaniquement dans une direction de marche sur une surface de sol (2) d'un champ agricole à travailler et est doté d'outils (3) pour ameublir ou trancher la surface de sol (2), sachant que les outils (3) sont disposés avec des étançons (4) sur un cadre (5) les uns à côté des autres transversalement à la direction de marche de l'engin de travail du sol (1) et espacés les uns derrière les autres en une ou plusieurs rangées, sachant que les étançons (4) sont disposés respectivement sur le cadre (5) pouvant pivoter verticalement au moins sur un axe transversal (6), sachant qu'entre étançon (4) et cadre (5) est disposé un dispositif de sécurité (7), lequel est composé d'au moins un accumulateur d'énergie (8) et d'une butée de profondeur (9), sachant que la butée de profondeur (9) définit la position de travail de l'outil (3) et l'accumulateur d'énergie (8) permet, lorsque l'outil (3) rencontre un obstacle dans le sol, un mouvement de pivotement de l'étançon (4) d'une position de travail dans une position de sécurité supérieure et après passage de l'obstacle, un retour de l'étançon (4) en position de travail, sachant que l'accumulateur d'énergie (8) est préchargé dans la position de travail avec une énergie de base ou force de base,
**caractérisé en ce qu'**
un accumulateur d'énergie (8) est également attribué à la butée de profondeur (9), lequel génère ou autorise, en cas de butée de l'étançon (4) sur la butée de profondeur (9), un mouvement de l'étançon (4) de la position de travail dans une position de sécurité inférieure et après la butée, un retour de l'étançon (4) en position de travail.

2. Engin de travail du sol selon la revendication 1,
**caractérisé en ce que**
l'énergie du mouvement de l'étançon (4) de la position de travail dans la position de sécurité supérieure et dans la position de sécurité inférieure est introduite dans le même accumulateur d'énergie (8).

3. Engin de travail du sol selon la revendication 1 ou 2,
**caractérisé en ce que**
le couple de déclenchement dans la position de sécurité supérieure agissant par l'accumulateur d'énergie (8) autour de l'axe transversal (6) sur l'étançon (4) et le couple de déclenchement dans la position de sécurité inférieure s'écartent l'un de l'autre.

4. Engin de travail du sol selon l'une quelconque des revendications précédentes
**caractérisé en ce que**
l'accumulateur d'énergie (8) est constitué comme un ressort élastique en une ou plusieurs parties.

5. Engin de travail du sol selon l'une quelconque des revendications précédentes
**caractérisé en ce que**
l'accumulateur d'énergie (8) est constitué comme un vérin de commande sollicité par un moyen de pression, dont une ou plusieurs chambres de pression sont reliées à un ou plusieurs réservoirs sous pression.

6. Engin de travail du sol selon l'une quelconque des revendications précédentes
**caractérisé en ce que**
l'accumulateur d'énergie (8) est en liaison d'une part au moins indirectement avec l'étançon (4) et d'autre part avec une butée d'appui (10) mobile, laquelle est logée pouvant pivoter sur la cadre (5).

7. Engin de travail du sol selon l'une quelconque des revendications précédentes
**caractérisé en ce que**
la butée de profondeur (9) est entourée au moins en partie par le contour de l'accumulateur d'énergie (10).

8. Engin de travail du sol selon l'une quelconque des revendications précédentes
**caractérisé en ce que**
la butée de profondeur (9) est constituée fixe dans une direction effective et au moins en partie flexible dans une autre direction effective.

9. Engin de travail du sol selon l'une quelconque des revendications précédentes
**caractérisé en ce que**
les outils (3) fixés sur l'étançon (4) pour le travail du sol, sont constitués comme des socs d'ameublissement, des socs de cultivateur ou comme des outils de coupe ou de mélange tournant autour d'un support (5) agissant comme un axe de rotation par rapport à l'étançon (4).
